# EUROPÄISCHE PATENTSCHRIFT

(11) **EP 4 265 891 B1**
(45) Veröffentlichungstag und Bekanntmachung des Hinweises auf die Patenterteilung: **13.08.2025**
(21) Anmeldenummer: 23163626.7
(22) Anmeldetag: 23.03.2023
(51) Int. Cl.: F01P 7/06, F04D 29/36, F01P 3/20, B60K 11/02, B60K 11/06, B60K 25/02, F04D 27/02

(54) **SYSTEM ZUM BETREIBEN EINER KÜHLEINRICHTUNG EINES NUTZFAHRZEUGS**
SYSTEM FOR OPERATING A COOLING DEVICE OF A COMMERCIAL VEHICLE
SYSTÈME DE FONCTIONNEMENT D'UN DISPOSITIF DE REFROIDISSEMENT D'UN VÉHICULE UTILITAIRE

(30) Priorität: 21.04.2022 DE 102022109600
(43) Veröffentlichungstag der Anmeldung: 25.10.2023
(73) Patentinhaber: Deere & Company, Moline, IL 61265 (US)
(72) Erfinder: BILLICH, MANUEL, 68163 Mannheim (DE)
(74) Vertreter: Dehnhardt, Florian Christopher

(56) Entgegenhaltungen:
- DE-A1- 102019 003 713
- US-A- 2 189 888
- US-A1- 2005 100 444
- US-A1- 2020 318 584

## Beschreibung

Die Erfindung betrifft ein System zum Betreiben einer Kühleinrichtung eines Nutzfahrzeugs, umfassend einen mittels eines Lüfterantriebs in Drehung versetzbaren Axiallüfter zur Erzeugung eines Kühlluftstroms, der der Beaufschlagung eines zu kühlenden Fahrzeugaggregats dient, wobei der Axiallüfter eine Vielzahl von Lüfterflügeln aufweist, die sich durch Auslenkung eines druckbetätigbaren Aktuators bezüglich eines Anstellwinkels verschwenken lassen, einen Temperatursensor zur Bestimmung eines Istwerts einer Temperaturgröße, die eine aktuelle Betriebstemperatur des Fahrzeugaggregats wiedergibt, und eine Kontrolleinheit, die den Istwert der Temperaturgröße mit einem vorgegebenen Sollwert vergleicht, um nach Maßgabe einer ermittelten Regelabweichung einen Zielwert einer zur Betätigung des Aktuators vorgesehenen Steuergröße auszugeben. Ein derartiges System, das auf einer reinen Temperaturregelung eines Axiallüfters mit verstellbaren Lüfterflügeln zur Kühlleistungsanpassung beruht, ist beispielsweise aus der DE 10 2019 003 713 A1 oder aus der US2005/100444A1 bekannt. Da die Betriebstemperatur eines luftgekühlten Fahrzeugaggregats verhältnismäßig träge auf Veränderungen des Kühlluftstroms reagiert, ist ein unpräzises, insbesondere zum Überschwingen neigendes Temperaturregelverhalten die Folge.

Um das Regelverhalten zu verbessern, ist es daher bekannt, zusätzlich einen unterlagerten Regelkreis vorzusehen, der der Einregelung des Anstellwinkels der Lüfterflügel, genauer gesagt einer zur Verstellung der Lüfterflügel an einem Aktuator auftretenden Auslenkung dient. Die zur Einregelung des Anstellwinkels erforderliche sensorische Erfassung der Auslenkung ist vergleichsweise aufwändig, denn diese tritt an einem sich drehenden Teil des Axiallüfters, namentlich an einer die Lüfterflügel tragenden Lüfternabe auf, in die der Aktuator baulich integriert ist.

Es ist daher Aufgabe der vorliegenden Erfindung, ein System der eingangs genannten Art hinsichtlich der Erzielung eines präzisen Regelverhaltens bei zugleich verringertem technischen Aufwand anzugeben.

Diese Aufgabe wird durch ein System zum Betreiben einer Kühleinrichtung eines Nutzfahrzeugs mit den Merkmalen des Patentanspruchs 1 gelöst.

Das System zum Betreiben einer Kühleinrichtung eines Nutzfahrzeugs umfasst einen mittels eines Lüfterantriebs in Drehung versetzbaren Axiallüfter zur Erzeugung eines Kühlluftstroms, der der Beaufschlagung eines zu kühlenden Fahrzeugaggregats dient. Hierbei weist der Axiallüfter eine Vielzahl von Lüfterflügeln auf, die sich durch Auslenkung eines druckbetätigbaren Aktuators bezüglich eines Anstellwinkels verschwenken lassen. Des Weiteren umfasst das System einen Temperatursensor zur Bestimmung eines Istwerts einer Temperaturgröße, die eine aktuelle Betriebstemperatur des Fahrzeugaggregats wiedergibt, und eine Kontrolleinheit, die den Istwert der Temperaturgröße mit einem vorgegebenen Sollwert vergleicht, um nach Maßgabe einer ermittelten Regelabweichung einen Zielwert einer zur Betätigung des Aktuators vorgesehenen Steuergröße auszugeben. Erfindungsgemäß handelt es sich bei der Steuergröße um einen zur Auslenkung des Aktuators vorgesehenen hydraulischen oder pneumatischen Betätigungsdruck.

Der Betätigungsdruck ist nicht nur mit vergleichsweise geringem technischen Aufwand mittels eines herkömmlichen Drucksensors an beliebiger Stelle einer zum Aktuator führenden Drucksteuerleitung (und damit abseits bewegter Teile des Axiallüfters) erfassbar, sondern erlaubt es zudem bei bekanntem Auslenkungs- und damit Stellverhalten des Aktuators, eine eindeutige Vorhersage des sich abhängig vom eingesteuerten Betätigungsdruck ergebenden Anstellwinkels der Lüfterflügel zu treffen.

Dies eröffnet unterschiedliche Möglichkeiten, um zu einer präzisen Einstellung des mittels des Axiallüfters erzeugbaren Kühlluftstroms zu gelangen.

### Feedback-Ansatz

Erfindungsgemäß ist ein elektrisch steuerbares Druckregelventil zur Druckbetätigung des Aktuators vorhanden, wobei die Kontrolleinheit den ausgegebenen Zielwert der Steuergröße mit einem sensorisch erfassten Istwert vergleicht, um nach Maßgabe einer ermittelten Regelabweichung ein elektrisches Betätigungssignal zur Ansteuerung des Druckregelventils zu erzeugen.

Bei diesem Ansatz umfasst das erfindungsgemäße System somit eine Anordnung kaskadierter Regelschleifen. Neben einer äußeren Regelschleife, in der eine Minimierung der für die Temperaturgröße ermittelten Regelabweichung erfolgt, ist ferner eine innere Regelschleife vorhanden, die auf die eigentliche Einregelung der Steuergröße mittels des Druckregelventils gerichtet ist. Das Druckregelventil ist damit Bestandteil der inneren Regelschleife, mögliche Toleranzen hinsichtlich seines Betätigungsverhaltens werden im Rahmen dessen mit ausgeregelt.

Die Erfassung des Istwerts der Steuergröße, mithin des am Aktuator anliegenden hydraulischen oder pneumatischen Betätigungsdrucks erfolgt hierbei mittels eines mit der Kontrolleinheit in Verbindung stehenden Drucksensors.

### Feedforward-Ansatz

In einem nicht erfindungsgemäßen Beispiel besteht die Möglichkeit, dass ein elektrisch steuerbares Druckregelventil zur Druckbetätigung des Aktuators vorhanden ist, wobei die Kontrolleinheit unmittelbar ein den Zielwert der Steuergröße repräsentierendes elektrisches Betätigungssignal zur Vorsteuerung des Druckregelventils erzeugt.

Bei diesem Ansatz fehlt die innere Regelschleife, vielmehr wird das zu erwartende Betätigungsverhalten des Druckregelventils von der Kontrolleinheit bei der Ausgabe des Zielwerts prädiktiv mit einbezogen. Das zu erwartende Betätigungsverhalten des Druckregelventils wird beispielsweise vorab auf Grundlage von Simulationen oder empirischen Versuchen ermittelt, und ist in Form eines damit korrespondierenden Parametersatzes in einer mit der Kontrolleinheit kommunizierenden Speichereinheit hinterlegt.

Vorzugsweise ist das Druckregelventil als 3/2-Wege-Magnetventil zur Betätigung eines von dem Aktuator umfassten einfachwirkenden Stellzylinders ausgebildet. Der einfachwirkende Stellzylinder ist in eine Lüfternabe des Axiallüfters baulich integriert und wirkt mit einem federbelasteten Rückstellmittel derart zusammen, dass die Lüfterflügel in drucklosem Betätigungszustand einen zu einem minimalen Förderstrom führenden Anstellwinkel einnehmen. Eine an der Lüfternabe vorgesehene Drehdurchführung stellt über eine Drucksteuerleitung eine Verbindung mit dem Stellzylinder her.

Durch Aufbau eines entsprechenden Betätigungsdrucks im Stellzylinder lässt sich der Anstellwinkel der Lüfterflügel entgegen der Wirkung des Rückstellmittels in Richtung eines zunehmenden Förderstroms auslenken. Auf diese Weise ist eine gezielte Anpassung der Kühlleistung des Axiallüfters durch Modulation der Stellung des 3/2-Wege-Magnetventils zwischen seinen beiden Ventilstellungen möglich. Hierbei erfolgt in einer ersten Ventilstellung eine Druckbeaufschlagung, in einer zweiten Ventilstellung eine Druckentlastung des Stellzylinders.

Typischerweise ist das mittels des Axiallüfters zu kühlende Fahrzeugaggregat Bestandteil eines Betriebssystems des Nutzfahrzeugs. Das Fahrzeugaggregat kann einen Fahrantrieb mit einem Verbrennungs- und/oder Elektromotor aufweisen, der über ein Getriebe mit angetriebenen Rädern des Nutzfahrzeugs in Verbindung steht und/oder dem Betrieb diverser Arbeits- oder Zusatzfunktionen des Nutzfahrzeugs dient. Daneben kann es sich auch um zu kühlende periphere Komponenten wie ein Hydrauliksystem, einen zum Betrieb des Verbrennungsmotors vorgesehenen Turbolader oder eine von einer Kabinenlüftung umfasste Klimaanlage handeln. Jedem der Fahrzeugaggregate kann ein separater Flüssigkeitskühlkreislauf zugeordnet sein, in dem sich ein jeweiliger Wärmetauscher befindet, der zum Zwecke der Wärmeabfuhr von dem mittels des Axiallüfters erzeugten Kühlluftstrom durchsetzt wird.

Im Falle mehrerer separater Flüssigkeitskühlkreisläufe kann eine entsprechende Anzahl von Temperatursensoren vorhanden sein, deren Sensorsignale von der Kontrolleinheit zur Bestimmung des Istwerts der Temperaturgröße miteinander verknüpft werden, um einen kombinierten Kühlbedarf der verschiedenen Fahrzeugaggregate durch entsprechende Berücksichtigung und Gewichtung der jeweils zugehörigen Betriebstemperaturen zu bestimmen.

Das erfindungsgemäße System zum Betreiben einer Kühleinrichtung eines Nutzfahrzeugs wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: ein schematisch dargestelltes Ausführungsbeispiel des erfindungsgemäßen Systems zum Betreiben einer Kühleinrichtung eines Nutzfahrzeugs,
- Fig. 2: eine als Ablaufdiagramm veranschaulichte erste funktionelle Ausgestaltung des in Fig. 1 wiedergegebenen erfindungsgemäßen Systems, und
- Fig. 3: eine als Ablaufdiagramm veranschaulichte zweite funktionelle Ausgestaltung des in Fig. 1 wiedergegebenen erfindungsgemäßen Systems.

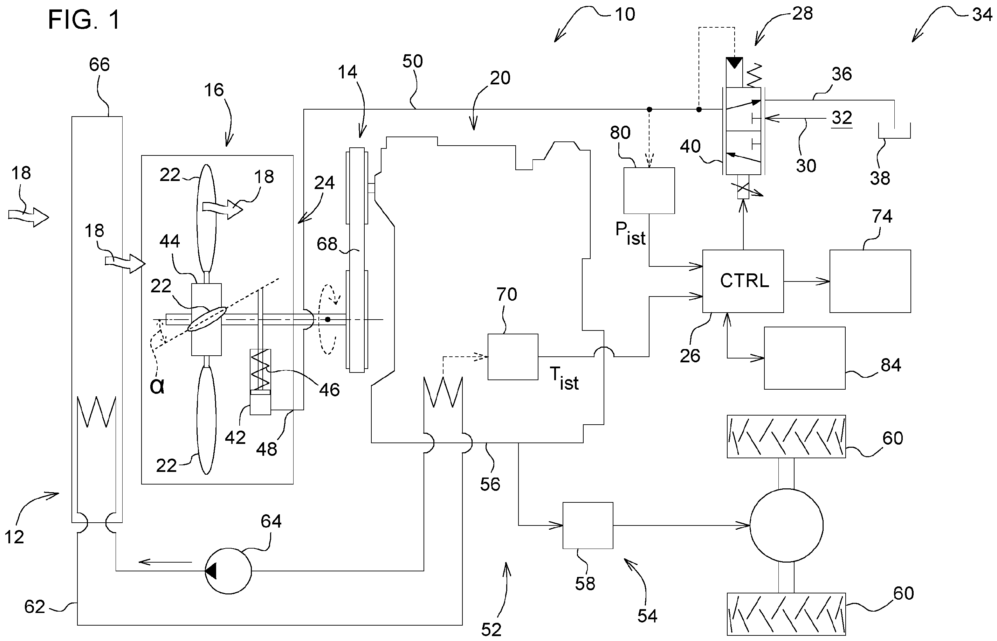

Fig. 1 zeigt ein schematisch dargestelltes Ausführungsbeispiel des erfindungsgemäßen Systems zum Betreiben einer Kühleinrichtung eines Nutzfahrzeugs.

Demgemäß umfasst das System 10 eine Kühleinrichtung 12 mit einem mittels eines Lüfterantriebs 14 in Drehung versetzbaren Axiallüfter 16 zur Erzeugung eines Kühlluftstroms 18, der der Beaufschlagung eines zu kühlenden Fahrzeugaggregats 20 dient. Der Axiallüfter 16 weist eine Vielzahl von Lüfterflügeln 22 auf, die sich durch Auslenkung eines druckbetätigbaren Aktuators 24 bezüglich eines Anstellwinkels α verschwenken lassen.

Ein von einer Kontrolleinheit 26 elektrisch steuerbares Druckregelventil 28 dient der Druckbetätigung des Aktuators 24. Das Druckregelventil 28 wird über einen Zulauf 30 mit unter Druck stehender Hydraulikflüssigkeit aus einem Hydrauliksystem 32 des Nutzfahrzeugs 34 gespeist, ein Rücklauf 36 mündet in ein von dem Hydrauliksystem 32 umfasstes Reservoir 38.

Genauer gesagt ist das Druckregelventil 28 als 3/2-Wege-Magnetventil 40 zur Betätigung eines von dem Aktuator 24 umfassten einfachwirkenden Stellzylinders 42 ausgebildet. Der einfachwirkende Stellzylinder 42 ist in eine Lüfternabe 44 des Axiallüfters 16 baulich integriert (entgegen der aus Übersichtlichkeitsgründen gewählten Ansicht in Fig. 1) und wirkt mit einem federbelasteten Rückstellmittel 46 derart zusammen, dass die Lüfterflügel 22 in drucklosem Betätigungszustand einen zu einem minimalen Förderstrom führenden Anstellwinkel α einnehmen. Eine an der Lüfternabe 44 vorgesehene Drehdurchführung 48 stellt über eine Drucksteuerleitung 50 eine Verbindung mit dem Stellzylinder 42 her.

Durch Aufbau eines entsprechenden Betätigungsdrucks im Stellzylinder 42 als Steuergröße lässt sich der Anstellwinkel α der Lüfterflügel 22 entgegen der Wirkung des Rückstellmittels 46 in Richtung eines zunehmenden Förderstroms auslenken. Auf diese Weise ist eine gezielte Anpassung der Kühlleistung des Axiallüfters 16 durch Modulation der Stellung des 3/2-Wege-Magnetventils 40 zwischen seinen beiden Ventilstellungen möglich. Hierbei erfolgt in einer ersten Ventilstellung 40a eine Druckbeaufschlagung über den Zulauf 30, in einer zweiten Ventilstellung 40b über den Rücklauf 36 eine Druckentlastung des Stellzylinders 42 in Richtung des Reservoirs 38.

Es sei angemerkt, dass anstelle der beschriebenen hydraulischen auch eine pneumatische Druckbetätigung des Aktuators 24 denkbar ist.

Das mittels des Axiallüfters 16 zu kühlende Fahrzeugaggregat 20 ist Bestandteil eines Betriebssystems 52 des Nutzfahrzeugs 34. Bei dem nicht näher dargestellten Nutzfahrzeug 34 handelt es sich beispielsweise um ein land- oder forstwirtschaftliches Fahrzeug bzw. ein Baufahrzeug.

Beispielhaft weist das Fahrzeugaggregat 20 einen Fahrantrieb 54 mit einem Verbrennungs- und/oder Elektromotor 56 auf, der über ein Getriebe 58 mit angetriebenen Rädern 60 des Nutzfahrzeugs 34 in Verbindung steht und/oder dem Betrieb diverser Arbeits- oder Zusatzfunktionen des Nutzfahrzeugs 34 dient. Dem Fahrzeugaggregat 20 ist ein wasser- oder ölführender Flüssigkeitskühlkreislauf 62 zugeordnet, in dem sich eine Kühlmittelpumpe 64 sowie ein Wärmetauscher 66 befindet, der zum Zwecke der Wärmeabfuhr von dem mittels des Axiallüfters 16 erzeugten Kühlluftstrom 18 durchsetzt wird. Hierzu wird der Axiallüfter 16 entweder über den als Riementrieb 68 ausgebildeten Lüfterantrieb 14 seitens des Verbrennungs- und/oder Elektromotors 56 oder aber mittels eines eigenen elektrischen Antriebs in Drehung versetzt.

Des Weiteren umfasst das System 10 einen Temperatursensor 70 zur Bestimmung eines eine aktuelle Betriebstemperatur des Fahrzeugaggregats 20 wiedergebenden Istwerts Tᵢₛₜ einer Temperaturgröße. Die Bestimmung des Istwerts Tᵢₛₜ erfolgt seitens der Kontrolleinheit 26 auf Grundlage der von dem Temperatursensor 70 bereitgestellten Sensorsignale.

Der Übersichtlichkeit halber ist in Fig. 1 lediglich ein einzelnes Fahrzeugaggregat 20 gezeigt, daneben kann es sich jedoch auch um zu kühlende periphere Komponenten wie das Hydrauliksystem 32, einen zum Betrieb des Verbrennungsmotors 56 vorgesehenen Turbolader oder eine von einer Kabinenlüftung umfasste Klimaanlage handeln. Jedem der Fahrzeugaggregate 20 ist ein separater Flüssigkeitskühlkreislauf 62 zugeordnet, in dem sich ein jeweiliger Wärmetauscher 66 befindet, der zum Zwecke der Wärmeabfuhr von dem mittels des Axiallüfters 16 erzeugten Kühlluftstrom 18 durchsetzt wird.

Im Falle mehrerer separater Flüssigkeitskühlkreisläufe 62 ist eine entsprechende Anzahl von Temperatursensoren 70 vorhanden, deren Sensorsignale von der Kontrolleinheit 26 zur Bestimmung des Istwerts Tᵢₛₜ der Temperaturgröße miteinander verknüpft werden, um einen kombinierten Kühlbedarf der verschiedenen Fahrzeugaggregate 20 durch entsprechende Berücksichtigung und Gewichtung der jeweils zugehörigen Betriebstemperaturen zu bestimmen.

Weitere strukturelle Details ergeben sich in Zusammenhang mit den beiden nachfolgend erläuterten funktionellen Ausgestaltungen des in Fig. 1 abgebildeten Systems.

### Feedback-Ansatz

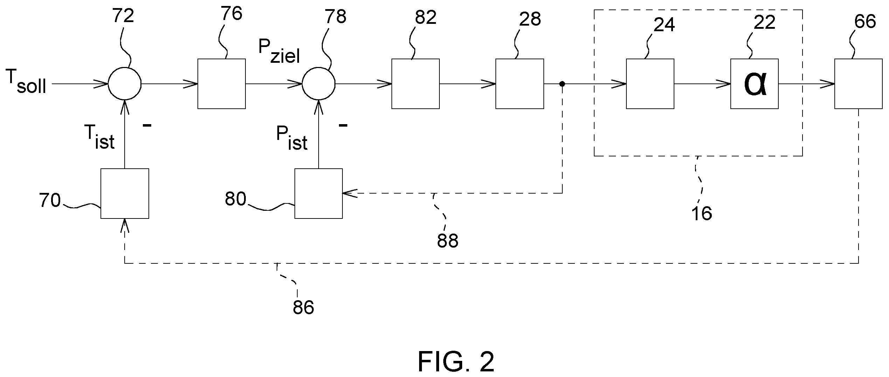

So ist in einer in Fig. 2 gezeigten ersten funktionellen Ausgestaltung des Systems 10 vorgesehen, dass die Kontrolleinheit 26 zunächst in einem ersten Funktionsblock 72 den mittels des Temperatursensors 70 bestimmten Istwert Tᵢₛₜ der Temperaturgröße mit einem vorgegebenen Sollwert Tₛₒₗₗ vergleicht. Die Vorgabe des Sollwerts Tₛₒₗₗ erfolgt hierbei aufgrund eines aktuellen Kühlbedarfs des Fahrzeugaggregats 20. Der aktuelle Kühlbedarf des Fahrzeugaggregats 20 wird vorliegend von einem Motorsteuergerät 74 (siehe Fig. 1) bestimmt sowie zur entsprechenden Festlegung des Sollwerts Tₛₒₗₗ der Temperaturgröße an die Kontrolleinheit 26 übermittelt.

Nach Maßgabe einer im ersten Funktionsblock 72 ermittelten Regelabweichung zwischen dem Istwert Tᵢₛₜ und dem Sollwert Tₛₒₗₗ der Temperaturgröße bestimmt die Kontrolleinheit 26 anschließend in einem zweiten Funktionsblock 76 einen Zielwert p_{ziel} für den am Aktuator 24 einzusteuernden Betätigungsdruck.

Darauf aufbauend erfolgt in einem dritten Funktionsblock 78 ein Vergleich des im zweiten Funktionsblock 76 ausgegebenen Zielwerts p_{ziel} mit einem in der Drucksteuerleitung 50 des Aktuators 24 mittels eines Drucksensors 80 erfassten Istwerts pᵢₛₜ des Betätigungsdrucks, wobei die Kontrolleinheit 26 in einem vierten Funktionsblock 82 nach Maßgabe einer im dritten Funktionsblock 78 ermittelten Regelabweichung zwischen dem Istwert pᵢₛₜ und dem Zielwert p_{ziel} des Betätigungsdrucks ein elektrisches Betätigungssignal zur Ansteuerung des Druckregelventils 28 erzeugt. Eine zur Erzeugung des elektrischen Betätigungssignals vorgesehene Steuerkurve ist in einer mit der Kontrolleinheit 26 in Verbindung stehenden Speichereinheit 84 (siehe Fig. 1) hinterlegt.

Bei diesem Ansatz umfasst das System 10 somit eine Anordnung kaskadierter Regelschleifen. Neben einer äußeren Regelschleife 86, in der eine Minimierung der für die Temperaturgröße ermittelten Regelabweichung erfolgt, ist ferner eine innere Regelschleife 88 vorhanden, die auf die eigentliche Einregelung des Betätigungsdrucks mittels des Druckregelventils 28 gerichtet ist. Das Druckregelventil 28 ist damit Bestandteil der inneren Regelschleife 88, mögliche Toleranzen hinsichtlich seines Betätigungsverhaltens werden im Rahmen dessen mit ausgeregelt.

### Feedforward-Ansatz

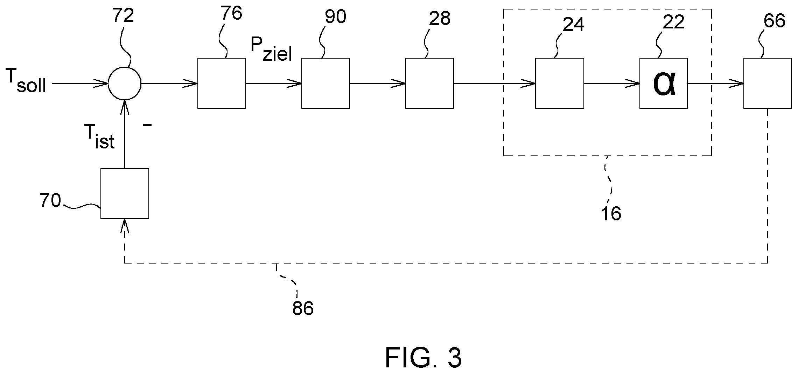

Eine zweite funktionelle Ausgestaltung des Systems 10 ist in Fig. 3 wiedergegeben. Hier ist vorgesehen, dass die Kontrolleinheit 26 in einem dritten Funktionsblock 90 unmittelbar ein den Zielwert p_{ziel} des Betätigungsdrucks repräsentierendes elektrisches Betätigungssignal zur Vorsteuerung des Druckregelventils 28 erzeugt. Bei diesem Ansatz ist der erste wie auch zweite Funktionsblock 72, 76 unverändert vorhanden, es fehlt jedoch die innere Regelschleife 88 und damit auch der hierfür erforderliche Drucksensor 80. Vielmehr wird das zu erwartende Betätigungsverhalten des Druckregelventils 28 von der Kontrolleinheit 26 bei der Ausgabe des Zielwerts p_{ziel} im dritten Funktionsblock 90 prädiktiv mit einbezogen. Das zu erwartende Betätigungsverhalten des Druckregelventils 28 wird vorab auf Grundlage von Simulationen oder empirischen Versuchen ermittelt, und ist in Form eines damit korrespondierenden Parametersatzes in der mit der Kontrolleinheit 26 kommunizierenden Speichereinheit 84 hinterlegt.

## Patentansprüche

1. System zum Betreiben einer Kühleinrichtung eines Nutzfahrzeugs, umfassend
einen mittels eines Lüfterantriebs (14) in Drehung versetzbaren Axiallüfter (16) zur Erzeugung eines Kühlluftstroms (18), der der Beaufschlagung eines zu kühlenden Fahrzeugaggregats (20) dient, wobei der Axiallüfter (16) eine Vielzahl von Lüfterflügeln (22) aufweist, die sich durch Auslenkung eines druckbetätigbaren Aktuators (24) bezüglich eines Anstellwinkels (α) verschwenken lassen,
einen Temperatursensor (70) zur Bestimmung eines Istwerts (Tᵢₛₜ) einer Temperaturgröße, die eine aktuelle Betriebstemperatur des Fahrzeugaggregats (20) wiedergibt, und
eine Kontrolleinheit (26), die den Istwert (Tᵢₛₜ) der Temperaturgröße mit einem vorgegebenen Sollwert (Tₛₒₗₗ) vergleicht, um nach Maßgabe einer ermittelten Regelabweichung einen Zielwert (p_{ziel}) einer zur Betätigung des Aktuators (24) vorgesehenen Steuergröße auszugeben, **dadurch gekennzeichnet, dass** es sich bei der Steuergröße um einen zur Auslenkung des Aktuators (24) vorgesehenen hydraulischen oder pneumatischen Betätigungsdruck handelt **dadurch gekennzeichnet, dass** ein elektrisch steuerbares Druckregelventil (28) zur Druckbetätigung des Aktuators (24) vorhanden ist, wobei die Kontrolleinheit (26) den ausgegebenen Zielwert (p_{ziel}) der Steuergröße mit einem sensorisch erfassten Istwert (pᵢₛₜ) vergleicht, um nach Maßgabe einer ermittelten Regelabweichung ein elektrisches Betätigungssignal zur Ansteuerung des Druckregelventils (28) zu erzeugen.

2. System nach Anspruch 1, **dadurch gekennzeichnet, dass** das Druckregelventil (28) als 3/2-Wege-Magnetventil (40) zur Betätigung eines von dem Aktuator (24) umfassten einfachwirkenden Stellzylinders (42) ausgebildet ist.

3. System nach Anspruch 1 oder 2, **dadurch gekennzeichnet, dass** das mittels des Axiallüfters (16) zu kühlende Fahrzeugaggregat (20) Bestandteil eines Betriebssystems (52) des Nutzfahrzeugs (34) ist.

## Claims

1. System for operating a cooling device of a utility vehicle, comprising
an axial fan (16) which can be set in rotation by means of a fan drive (14) and which is used to generate a cooling air stream (18) for impingement on a vehicle assembly (20) that is to be cooled, the axial fan (16) having a multiplicity of fan blades (22) that can be pivoted in terms of an angle of incidence (α) by deflection of a pressure-operable actuator (24),
a temperature sensor (70) for determining an actual value (T_{actual}) of a temperature variable that reflects a present operating temperature of the vehicle assembly (20), and
a control unit (26) that compares the actual value (T_{actual}) of the temperature variable with a specified setpoint value (Tₛₑₜₚₒᵢₙₜ) in order, in accordance with an ascertained control deviation, to output a target value (p_{target}) of a control variable provided for the operation of the actuator (24), **characterized in that** the control variable is a hydraulic or pneumatic operation pressure provided for deflecting the actuator (24), **characterized in that** an electrically controllable pressure control valve (28) is provided for the pressure operation of the actuator (24), the control unit (26) comparing the output target value (p_{target}) of the control variable with a sensor-detected actual value (p_{actual}) in order, in accordance with an ascertained control deviation, to generate an electrical operation signal for activating the pressure control valve (28).

2. System according to Claim 1, **characterized in that** the pressure control valve (28) is configured as a 3/2 directional solenoid valve (40) for operating a single-acting positioning cylinder (42) that is comprised by the actuator (24).

3. System according to Claim 1 or 2, **characterized in that** the vehicle assembly (20) that is to be cooled by means of the axial fan (16) is a constituent part of an operating system (52) of the utility vehicle (34).

## Revendications

1. Système pour faire fonctionner un dispositif de refroidissement d'un véhicule utilitaire, comprenant
un ventilateur axial (16) apte à être mis en rotation au moyen d'un entraînement de ventilateur (14) pour produire un flux d'air de refroidissement (18) qui sert à alimenter un ensemble (20) de véhicule à refroidir, le ventilateur axial (16) comprenant une pluralité de pales de ventilateur (22) qui sont aptes à être pivotées par rapport à un angle de réglage (α) par déviation opérée par un actionneur (24) actionnable par pression,
un capteur de température (70) pour déterminer une valeur réelle (Tᵢₛₜ) d'une grandeur de température qui reflète une température de fonctionnement actuelle de l'ensemble (20) de véhicule, et
une unité de commande (26) qui compare la valeur réelle (Tᵢₛₜ) de la grandeur de température à une valeur de consigne prédéfinie (Tₛₒₗₗ) afin de délivrer, en fonction d'un écart de régulation déterminé, une valeur cible (p_{ziel}) d'une grandeur de commande prévue pour l'actionnement de l'actionneur (24), **caractérisé en ce que** la grandeur de commande est une pression d'actionnement hydraulique ou pneumatique destinée à la déviation de l'actionneur (24) **caractérisé en ce qu'**il est prévu une vanne (28) de régulation de pression à commande électrique pour l'actionnement en pression de l'actionneur (24), l'unité de commande (26) comparant la valeur de consigne (p_{ziel}) émise de la grandeur de commande avec une valeur réelle (pᵢₛₜ) détectée par un capteur afin de générer, en fonction d'un écart de régulation déterminé, un signal de commande électrique pour la commande de la vanne (28) de régulation de pression.

2. Système selon la revendication 1, **caractérisé en ce que** la vanne (28) de régulation de pression est conçue sous la forme d'une électrovanne à 3/2 voies (40) pour actionner un vérin de réglage à simple effet (42) comprenant l'actionneur (24).

3. Système selon la revendication 1 ou la revendication 2, **caractérisé en ce que** l'ensemble (20) de véhicule à refroidir au moyen du ventilateur axial (16) fait partie d'un système d'exploitation (52) du véhicule utilitaire (34).
